# EUROPEAN PATENT APPLICATION

(11) **EP 1 026 195 A2**
(43) Date of publication of application: **09.08.2000**
(21) Application number: 00830023.8
(22) Date of filing: 18.01.2000
(51) Int. Cl.: C08J 11/16, C08J 11/06

(54) **Process for recycling used carpet**

(30) Priority: 01.02.1999 IT FI990020
(71) Applicant: Diddi & Gori S.p.A., 50041 Calenzano (Firenze) (IT)
(72) Inventor: Diddi, Gabriele, 59100 Prato (IT)
(74) Representative: Bardini, Marco Luigi

(57) **Abstract**

A process for recycling used carpet, said carpet comprising a layer of needlepunched non-woven fabric of a synthetic fiber and of a layer of binder applied onto a face thereof, said binder including a water-resistant vinyl resin such as a polyvinyl acetate copolimer. The used carpet is shredded and washed with a 5-30% NaOH solution in order to completely dissolve the binder layer, and the fiber layer is separated and reclaimed. Then the liquid phase is acidified to precipitate the binder, which is separated and reclaimed.

## Description

The present invention relates to process for recycling a textile material for floor covering, in particular a wall-to-wall carpeting.

More specifically, the invention is aimed at a process for recycling those types of carpets that are subject to an intensive use over a short period of time, for instance during a fair show, and are destined to be removed after use, and for recovering useful material therefrom.

Nowadays, textile covering materials for these types of use are manufactured using synthetic materials, essentially for their cost-effectiveness, and include a needlepunched base layer made of a synthetic fiber, mainly a polyolefine fiber and in particular a polypropilene fiber, held together by a layer of binding resin applied onto a face thereof. The fitting of this type of carpeting is implemented by means of a two-sided tape, that also enables an easy removal of the carpeting after use.

The most serious drawback in the use of this type of carpeting lies in the fact that, once the consumed carpeting is removed after the fair, it has to be discarded as landfill waste, this resulting in a considerable cost for the user and an environmental damage. Taking into account the overall extension of the carpet-fitted areas in a fair show, and the frequency of such events, the vastness of the amounts of discarded material and therefore the seriousness of this drawback become evident.

According to a patent application filed on the same date by the same applicant, a carpet destined to the abovementioned use, made of a layer of needlepunched non-woven fabric a synthetic fiber and of a layer of binder, wherein the binding action is performed by a polyvinyl acetate-based vinyl resin, optionally copolymerized with at least one of the following compounds: ethylene; vinyl esters of linear and/or branched carboxylic acids C1-C20; acrylic, methacrylic, itaconic acid; acrylic or methacrylic esters of linear and/or branched C1-C20 alcohols,; maleic and/or fumaric esters of linear and/or branched C1-C20 alcohols; polyvinyl alcohols with a hydrolysis coefficient from 50 to 100, and a viscosity from 4 to 50 mPa.s. (4% aqueous solution).

Unlike binders used to date in the manufacture of this type of carpet, in the case of the binder according to the aforesaid patent application the resin exhibiting a binding activity has hydrolyzable functionalities, thus being apt to be dissolved under particular conditions.

Accordingly, an object of the present invention is to provide the operative conditions enabling the separation of the texile layer from the binder layer, thus avoiding the discarding of the used carpet.

Another object of the present invention is to provide a process enabling the recycle of used carpet without damaging the synthetic fiber forming the needlepunched layer, thus enabling the reuse thereof.

A further object of the present invention is to provide a process of the abovementioned type, not entailing the use of highly toxic products, or the adoption of particularly severe operative conditions.

These objects are attained with the process according to the present invention, that comprises the following steps:
- contacting the used carpeting, shredded into strips, with a hot alkaline washing solution for a period of time sufficient to dissolve the binder layer;
- separating by centrifugation the washing solution from the fiber layer;
- acidifying the solution up to pH 7-10 to precipitate the binder;
- separating the washing solution from the precipitate.

In a preferred embodiment of the invention the alkaline washing solution is a sodium hydroxide solution having a pH not lower than 14 and the following composition:
- sodium hydroxide 5-30%
- water 70-95%.

The operative washing temperature is selected in order to ensure the complete solubilization of the binder without damaging the fiber. For instance, in order to treat a polypropilenic fiber-based carpet, the operative washing temperature must be lower than 110°C, i.e. lower than the softening temperature of the fiber. On the other hand, the minimum temperature required to solubilize the binder has to be higher than a certain safety value, in order to avoid damaging of the carpet during use due to the possible spilling of hot liquids thereon. For the purposes of the present invention the optimal temperature range is deemed to be 60-90°C.

The treatment is carried out in an industrial washing machine for a period of time ranging from 30 to 60 minutes at the aforesaid temperature, thus obtaining the complete solubilization of the binder layer. Then a separation of the fiber from the solution is carried out by centrifugation, the fiber being rinsed in cold water, which is reintegrated to the solution.

Acidification of the solution containing the binder is carried out, e.g., with ammonium chloride or another equivalent acid reagent, added in an amount sufficient to bring the pH to a value able to completely precipitate the binder. This is obtained by bringing the pH to a value comprised between 7 and 10. The precipitate consisting of vinyl resin and inert charge, is separated from the water by centrifugation or filtration. The clear water thus obtained can be returned to the process water circuit, possibly after a chemical conditioning, whereas the reclaimed solid product having a pasty consistence can be reused in binder compositions for less valuable products in the field of floor coverings or for other uses. The fibrous material is brought back to a fiber state by processing it through a cutter and a grinder, and then it can be reintegrated in the carpet production cycle.

Obviously, prior to undergoing the aforesaid treatment, the used carpet is cleaned of any trace of two-sided tape and coarse dust, and it is graded according to the colour. Then it is shredded into strips of a suitable size for the washing machine treatment.

A practical implementation of the process according to the invention is provided hereinafter, given by way of example and not for limitative purposes.

80 kg of used carpet are loaded in an industrial washing machine of the ULIVELLI 120 type, the carpet being shredded into big strips and previously scoured of any coarse dirt. The carpet is made of a polypropilenic fiber and the binder layer is made of polyvinyl acetate containing aluminum hydroxide as inert filler, as well as dimethylphtalate as plasticizer and a thickening agent. The weight ratio of the fiber with respect to the total weight of the loaded carpet is about 40%.

The shredded carpet is processed in the washing machine with 400 l of a 10% sodium hydroxide at a 90°C temperature for 45 minutes, yielding a complete solubilization of the binder layer. The solution containing the binder is separated from the fibrous material, which is then rinsed with 250 l cold water. Rinse water is added to the binder solution and 20 l (stechiometric quantity) ammonium chloride are added thereto, up to a neutral pH value of the solution and obtaining the complete precipitation of the binder and of the filler.

Almost all the polypropylenic fiber is reclaimed, whereas the precipitate is reused as feedstock for the production of other covering materials or for other uses. The water of the washing and rinsing solution is returned to the process water circuit.

Variations and/or modifications may be brought to the carpeting recycling process according to the present invention without departing from the scope of the invention as defined in the attached claims.

## Claims

1. A process for the recycle of used carpet, said carpet comprising a layer of needlepunched non-woven fabric of a synthetic fiber and a layer of binder applied onto a face thereof, said binder including a aqueous suspension of a inert charge and a vinyl resin made of polyvinyl acetate optionally copolymerized with at least one of the following compounds: ethylene, vinyl esters of linear or branched C1-C20 carboxylic acids; acrylic, methacrylic, itaconic acid; acrylic or methacrylic esters of linear and/or branched C1-C20 alcohols; maleic and/or fumaric esters of linear and/or branched C1-C20 alcohols; polyvinyl alcohols with a hydrolysis coefficient from 50 to 100, and a viscosity of the 4% aqueous solution from 4 to 50 mPa.s., said process being characterized in that it comprises the following steps:
- contacting the used carpet, shredded into strips, with a hot alkaline washing solution for a period of time sufficient to dissolve the binder layer;
- separating by centrifugation the washing solution from the fiber layer.
- acidifying the solution up to pH 7-10 to precipitate the binder;
- separating the washing solution from the precipitated binder.

2. The process according to claim 1, wherein the alkaline solution is a sodium hydroxide solution having a pH not lower than 14.

3. The process according to claims 1 and 2, wherein the treatment temperature is comprised between 60 and 90°C.

4. The process according to anyone of the previous claims, wherein the precipitation of the binder from the solution separated from the fiber layer is obtained by addition of ammonium chloride or equivalent acid reagent.

5. The process according to anyone of the previous claims, wherein the washing water separated from the particulate is brought to neutrality prior to returning it to the process water circuit.

6. The process according to claim 1, wherein the used carpet is graded by colour and scoured of traces of two-sided tape and coarse dirt prior to be treated with said alkaline solution.

7. The process according to anyone of the previous claims, wherein said precipitated binder is reused in binder compositions for textiles floor covering materials or for other uses.
